# EUROPÄISCHE PATENTSCHRIFT

(11) **EP 0 847 541 B1**
(45) Veröffentlichungstag und Bekanntmachung des Hinweises auf die Patenterteilung: **16.04.2003**
(21) Anmeldenummer: 96938922.0
(22) Anmeldetag: 30.08.1996
(51) Int. Cl.: G02B 6/38

(54) **OPTISCHER STECKVERBINDER**
OPTICAL PLUG CONNECTOR
CONNECTEUR OPTIQUE MULTIPLE

(30) Priorität: 01.09.1995 DE 19533500
(43) Veröffentlichungstag der Anmeldung: 17.06.1998
(73) Patentinhaber: Infineon Technologies AG, 81669 München (DE)
(72) Erfinder: BEIER, Axel, D-13158 Berlin (DE); WEIGEL, Hans-Dieter, D-10405 Berlin (DE)
(74) Vertreter: Maikowski, Michael, Dipl.-Ing. Dr.
(86) Internationale Anmeldenummer: DE9601659
(87) Internationale Veröffentlichungsnummer: WO97009647

(56) Entgegenhaltungen:
- EP-A- 0 297 439
- US-A- 5 293 582
- US-A- 5 311 609

## Beschreibung

Die Erfindung bezieht sich auf einen optischen Steckverbinder zum optischen Anschluß eines Lichtwellenleiterkabels, das üblicherweise in einem Kabelmantel Zugentlastungsmittel und einen oder mehrere individuell von einem schützenden Mantel umgebene Lichtwellenleiter umfaßt und betrifft einen Steckverbinder nach dem Oberbegriff des Patentanspruchs 1.

Aus der EP-0 330 399 A1 ist ein Steckverbinder bekannt, bei dem ein abgemanteltes koppelseitiges Lichtwellenleiterende in einer zentralen Längsbohrung eines Steckerstifts verläuft. Das in Steckrichtung hintere Ende des Steckerstiftes ist von einem Stiftlager mit einer rückwärtigen Verlängerung aufgenommen, auf die ein Ende einer zur Steckerstiftlängsachse konzentrischen Schraubenfeder aufgeschoben ist. Diese Steckeranordnung ist in eine zentrale Bohrung eines ersten in Steckrichtung vorderen Gehäuseteils axial einbringbar. Das andere Ende der Schraubenfeder stützt sich an einem zweiten, hinteren Gehäuseteil mit einer Zentralbohrung ab, in der der Lichtwellenleiter zum Kabel hin verläuft. Die Steckerstiftanordnung ist in dem durch Verbinden der beiden Gehäuseteile entstehenden Gesamtgehäuse unverlierbar angeordnet.

Aus der US-A-5,311,609 ist ein DUPLEX-Steckverbinder mit einem Gehäuse bekannt, in dem mehrere Steckerstifte gemeinsam angeordnet sind. Die Steckerstifte sind in individuellen Aufnahmekammern gelagert und werden durch je eine konische Schraubenfeder individuell vorgespannt. Nachdem das Gehäuse von einem Deckel verschlossen ist, sind die Steckerstift-Anordnungen in den Aufnahmekammern unverlierbar gehalten.

Die EP-0 597 501 A1 beschreibt einen Abschluß-Steckverbinder der eingangs genannten Art mit einem zweikammrigen Gesamtgehäuse. In jede Gehäusekammer ist ein Innengehäuse einsetzbar, das seinerseits einen Steckerstift zum Abschluß eines Lichtwellenleiterendes und eine rückwärtig auf das Steckerstiftende aufgeschobene Schraubenfeder aufnimmt. Das Gehäuse weist eine Durchgangsöffnung auf, in der der Steckerstift entgegen der Schraubenfederkraft axial verschieblich gelagert ist. Mit Ausnahme eines schmalen frontseitigen Bügels ist das Innengehäuse nach oben vollständig offen. Die offene Oberseite wird nach der Endmontage von dem Gesamtgehäuse bedeckt. Um die von oben in das Innengehäuse eingeführte Steckeranordnung provisorisch zu sichern, sind separate Halter vorgesehen.

Bei dem bekannten Steckverbinder ist eine Vorkonfektionierung bei gleichzeitigem Schutz der Steckeranordnung nur durch ein zusätzliches Bauteil möglich, das vergleichsweise schwierig zu handhaben und zu montieren ist. Außerdem erfordert der bekannte Steckverbinder mindestens zwei das Gesamtgehäuse bildende Gehäuseteile, die individuell hergestellt, gehandhabt und verbunden werden müssen.

Der Erfindung liegt daher die Aufgabe zugrunde, einen besonders einfach und mit wenigen Einzelteilen aufgebauten, vorkonfektionierbaren Steckverbinder zu schaffen.

Diese Aufgabe wird erfindungsgemäß gelöst durch einen optischen Steckverbinder mit den Merkmalen des Patentanspruchs 1.

Ein wesentlicher Vorteil des erfindungsgemäßen Steckverbinders besteht darin, daß der Steckerstift, die Schraubenfeder und ggf. das Stiftlager (Steckeranordnung) nach dem Einbringen in das Gehäuse, Verschwenken zur Ausrichtung in die Steckrichtung und anschließendem Verrasten durch die Halterungselemente bereits eine vorkonfektionierte Baueinheit bilden, die während der anschließenden Fertigungsschritte als Einheit handhabbar ist. Dadurch können diverse vorkonfektionierte,
sofort einsetzbare Steckerstiftanordnungen bereitgehalten werden, die in einem ergänzenden abschließenden Arbeitsgang in an sich bekannter Weise mit dem rückwärtig einzuführenden, endseitig abgemantelten Lichtwellenleiter versehen werden können.

Nach einer fertigungstechnisch besonders vorteilhaften und aufwandsarmen Ausgestaltung der Erfindung ist vorgesehen, daß die Halterungselemente im Bereich der Öffnung radial nach innen gerichtete elastische Vorsprünge des Gehäuses sind, die geringer als der Außendurchmesser der Schraubenfeder beabstandet sind und die an der Schraubenfeder anliegen. Die elastischen Vorsprünge des Gehäuses sind beim Einbringen der Steckerbaugruppe elastisch aufweitbar und gelangen bei eingebrachter Baugruppe in ihre, die Schraubenfeder in der Durchgangsöffnung haltende Lage zurück.

Ein Ausführungsbeispiel der Erfindung wird nachfolgend anhand einer Zeichnung näher erläutert; es zeigen:
Figur 1 wesentliche Bestandteile des erfindungsgemäßen Steckverbinders in getrennter Darstellung und
Figur 2 Schnittdarstellungen eines Steckverbinders mit Einzelteilen gemäß Figur 1 im zusammengesetzten Zustand.

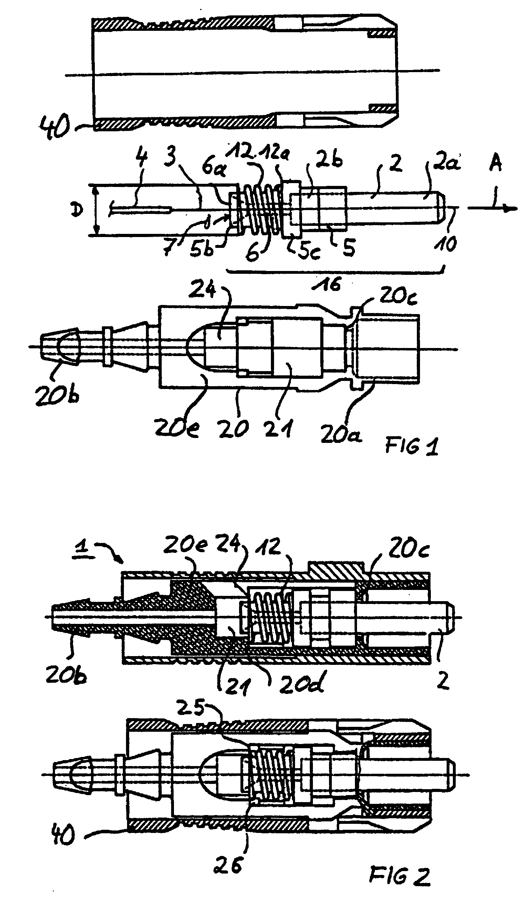

Gemäß den Figuren 1 und 2 umfaßt der Steckverbinder 1 einen Steckerstift 2, der ein Ende 3 eines andeutungsweise dargestellten abgemantelten Lichtwellenleiters 4 umgibt. Das Ende 3 ist in eine nicht sichtbare axiale Durchgangsbohrung des Steckerstifts 2 soweit einführbar, bis es aus dem koppelseitigen Ende 2a des Steckerstifts 2 austritt. Das in Steckerrichtung A rückwärtige Ende 2b des Steckerstifts ist von einem im Spritzguß hergestellten Stiftlager 5 aufgenommen, dessen rückwärtige Verlängerung 5b eine mit der Steckerstiftbohrung fluchtende Durchgangsbohrung 6 aufweist, die in einem rückwärtigen Einführtrichter 6a endet. In den Einführtrichter 6a kann vor dem Einführen des Endes 3 eine geeignete Menge Klebstoff 7 appliziert werden. Auf das rückwärtige Ende 5b des Stiftlagers 5 ist axial eine zur Längsachse (Steckachse) 10 des Steckerstifts 2 konzentrische Schraubenfeder 12 aufgeschoben, die sich mit ihrem einen Ende 12a an einer Schulter 5c des Stiftlagers 5 abstützt. Die aus dem Steckerstift 2, dem Lager 5 und der Feder 12 gebildete Baugruppe wird auch als Steckeranordnung 16 bezeichnet.

Der Steckverbinder umfaßt weiterhin ein einstückiges Gehäuse 20 mit einem radial geschlossenen Frontabschnitt 20a. Der Frontabschnitt ist durch eine umlaufende Mantelfläche geschlossen und hat einen nach innen ragenden Anschlagring 20c. Das Gehäuse 20 hat eine axiale Durchgangsöffnung 21, die im vorderen Bereich ein zur Aufnahme der Steckeranordnung 16 geeignetes Volumen aufweist und sich im rückwärtigen Bereich 20b auf einen den Lichtwellenleiter 4 aufnehmenden Durchmesser verjüngt. Der Steckerstift ist frontseitig zur Kopplung zugänglich und entgegen der Kraft der sich an einer Schulter 20d des Gehäuses 20 abstützenden Feder 12 axial verschieblich. In Steckrichtung A gesehen befindet sich hinter dem radial geschlossenen Frontabschnitt 20a eine in einer Seitenwand 20e ausgebildete Öffnung 24, durch die der mit der Schraubenfeder 12 und dem Stiftlager 5 versehene Steckerstift 2 (die Steckeranordnung 16) seitlich in das Gehäuse 20 einführbar ist. Beim Einführen der Steckeranordnung 16 wird zunächst das kopplungsseitige Ende 2a des Steckers 2 in das Gehäuse 20 eingeführt und in Steckrichtung A in den Frontabschnitt 20a geführt; durch anschließendes Verschwenken werden der Steckerstift und das Stiftlager 5 in Steckrichtung A ausgerichtet. Die Feder 12 wird in der ausgerichteten Position von Halterungselementen 25, 26 gehalten, die hinter der Schraubenfeder einklinken. Die Halterungselemente 25, 26 ragen im Bereich der Öffnung 24 radial nach innen in die Durchgangsöffnung 21 und sind so beabstandet, daß die lichte Weite zwischen ihnen geringer als der Außendurchmesser D der Schraubenfeder ist. Die Halterungselemente sind elastisch als Vorsprünge des Gehäuses 20 ausgebildet, so daß ihr lichter Abstand kurzfristig über das Maß des Außendurchmessers D erweiterbar ist.

Der Steckverbinder erlaubt eine Vormontage und Vorkonfektionierung der aus dem Steckerstift ggf. dem Stiftlager und der Schraubenfeder gebildeten Steckeranordnung unabhängig von den übrigen Bauteilen, insbesondere dem Lichtwellenleiter und dem Lichtwellenleiterkabel. Unabhängig von dieser Baugruppe kann das Lichtwellenleiterkabel vorbereitet und konfektioniert und in einem abschließenden Fertigungsgang mit der Steckeranordnung 16 verbunden werden. Der rückwärtige Bereich des Stiftlagers 5 ist in vorteilhafter Weise durch die Öffnung 24 auch nach der Vorkonfektionierung noch zugänglich, so daß der Klebstoff 7 einfach appliziert werden kann. Beim anschließenden Einführen wird das Lichtwellenleiterende 3 von dem Klebstoff benetzt. Nach vollständig in den Steckerstift 2 eingeführtem Lichtwellenleiterende 3 kann rückwärtig eine nicht näher gezeigte Knickschutztülle auf das rückwärtige Ende 20b des Gehäuses 20 aufgeschoben werden und mit dessen Kontur zur Festlegung nicht dargestellter Zugentlastungselemente dienen. Nach der Montage kann der Steckverbinder 1 bedarfsweise insgesamt in ein äußeres Gehäuse 40 eingeschoben und in diesem verrastet werden. Das Gehäuse 40 ist in üblicher Weise normgerecht ausgebildet und kann in an sich bekannter Weise zur Bildung eines sogenannten SC-Steckers oder "Push-Pull-Steckers" dienen.

## Patentansprüche

1. Optischer Steckverbinder mit einer Steckeranordnung (16), die umfasst:
- einen Steckerstift (2) zur Aufnahme eines Lichtwellenleiterendes (3) und
- eine zur Steckerstiftachse (10) konzentrische Schraubenfeder (12), die auf das rückwärtige Ende (2b;5b) des Steckerstiftes (2) oder eines den Steckerstift (2) aufnehmenden Stiftlagers (5) aufgeschoben ist,
und mit einem einstückigen Gehäuse (20)
- mit einem radial geschlossenen Frontabschnitt (20a) und mit einer Durchgangsöffnung (21), in der der Steckerstift (2) entgegen der Kraft der Schraubenfeder (12) axialverschieblich gelagert ist,
- mit einer in Steckrichtung (A) hinter dem Frontabschnitt (20a) in einer Gehäuseseitenwand (20e) ausgebildeten Öffnung (24), durch die die Steckeranordnung (16) seitlich in das Gehäuse (20) einführbar und in Steckrichtung (A) schwenkbar ist, und
- mit Halterungselementen (25, 26), die ein radiales Auswandern des Steckerstifts (2) und/oder der Schraubenfeder (12) verhindern,
**dadurch gekennzeichnet, dass**
- die Halterungselemente (25, 26) im Bereich der Öffnung (24) radial nach innen gerichtete elastische Vorsprünge des Gehäuses (20) sind, die beim Einbringen der Steckeranordnung (16) elastisch aufweitbar sind und bei eingebrachter Steckeranordnung (16) in eine die Steckeranordnung (16) haltende Lage zurückkehren.

2. Steckverbinder nach Anspruch 1, **dadurch gekennzeichnet, dass** die Halterungselemente geringer als der Außendurchmesser (D) der Schraubenfeder (12) beabstandet sind und dass die Halterungselemente (25, 26) an der Schraubenfeder anliegen.

## Claims

1. Optical connector having a plug arrangement (16) which comprises:
- a plug pin (2) for holding an optical fibre end (3) and
- a helical spring (12) which is concentric with the plug pin axis (10) and is pushed onto the rear end (2b;5b) of the plug pin (2) or of a pin bearing (5) holding the plug pin (2),
and having a single-piece housing (20)
- with a radially closed front section (20a) and with a through opening (21) in which the plug pin (2) is mounted in an axially displaceable fashion against the force of the helical spring (12),
- with an opening (24) which is constructed in a housing side wall (20e) behind the front section (20a) in the plug-in direction (A) and through which the plug arrangement (16) can be inserted laterally into the housing (20) and pivoted in the plug-in direction (A), and
- with holding elements (25, 26) which prevent the plug pin (2) and/or the helical spring (12) from being displaced radially,
**characterized in that**
- the holding elements (25, 26) are elastic projections of the housing (20), which are directed radially inwards in the region of the opening (24), can be expanded elastically upon insertion of the plug arrangement (16) and, with the plug arrangement (16) inserted, return to a position holding the plug arrangement (16).

2. Connector according to Claim 1, **characterized in that** the holding elements are spaced apart by less than the outside diameter (D) of the helical spring (12) and **in that** the holding elements (25, 26) bear against the helical spring.

## Revendications

1. Connecteur optique comprenant un dispositif (16) de connecteur, qui comprend :
- une broche (2) de connecteur pour la réception d'une extrémité (3) d'un guide d'ondes de lumière et
- un ressort (12) hélicoïdal concentrique à l'axe (10) de la broche de connecteur, qui est enfilé sur l'extrémité (2b ; 5b) arrière de la broche (2) de connecteur ou d'un palier (5) de broche recevant la broche (2) de connecteur,
et comprenant un boîtier (20) d'une seule pièce
- comprenant une partie (20a) frontale fermée radialement et ayant une ouverture (21) de traversée dans laquelle la broche (2) de connecteur est montée à coulissement axial à l'encontre de la force du ressort (12) hélicoïdal,
- comprenant une ouverture (24) formée dans la direction (A) d'enfichage derrière la partie (20a) frontale dans une paroi (20e) latérale du boîtier, ouverture par laquelle le dispositif (16) de connecteur peut être introduit latéralement dans le boîtier (20) et peut être basculé dans la direction (A) d'enfichage et
- comprenant des éléments (25, 26) de maintien qui empêchent la broche (2) de connecteur et/ou le ressort (12) hélicoïdal de se déplacer radialement,
**caractérisé en ce que**
- les éléments (25, 26) de maintien sont, dans la zone de l'ouverture (24) des saillies élastiques du boîtier (20), qui sont dirigées radialement vers l'intérieur, qui peuvent être élargies élastiquement lors de l'introduction du dispositif (16) de connecteur et qui reviennent, lorsque le dispositif (16) de connecteur a été introduit, dans une position maintenant le dispositif (16) de connecteur.

2. Connecteur suivant la revendication 1, **caractérisé en ce que** les éléments de maintien sont à une distance plus petite que le diamètre (D) extérieur du ressort (12) hélicoïdal et **en ce que** les éléments (25, 26) de maintien s'appliquent au ressort hélicoïdal.
